# EUROPEAN PATENT APPLICATION

(11) **EP 3 852 084 A1**
(43) Date of publication of application: **21.07.2021**
(21) Application number: 21150805.6
(22) Date of filing: 08.01.2021
(51) Int. Cl.: G08G 5/00, G08G 5/02, G01C 23/00, B64D 45/04

(54) **SYSTEMS AND METHODS THAT OPTIMIZE SPEED BRAKE OPERATIONS**

(30) Priority: 20.01.2020 IN 202011002502; 16.11.2020 US 202017098624
(71) Applicant: Honeywell International Inc., Charlotte, NC 28202 (US)
(72) Inventor: BORGES, Karen, Charlotte, North Carolina 28202 (US); DAYALAN, Mahesh, Charlotte, North Carolina 28202 (US); PHILIPOSE, Mathew, Charlotte, North Carolina 28202 (US); NADIPALLI, SaiKrishna, Charlotte, North Carolina 28202 (US); CHOUDHARY, Sudhakar, Charlotte, North Carolina 28202 (US); KRISHNA, Anand, Charlotte, North Carolina 28202 (US)
(74) Representative: Lucas, Peter Lawrence

(57) **Abstract**

Systems and methods for optimizing the operation of speed brakes in an aircraft. The method includes, upon receipt from a flight management system (FMS), a drag required notification that the aircraft has departed an assigned descent path, calculating an optimized operation of the speed brakes required to put the aircraft back on the assigned descent path; and displaying, on a display system, a speed-alert widget with accompanying text that advises the optimized operation of the speed brakes.

## Description

### CROSS REFERENCE TO RELATED APPLICATION

This application claims priority to Indian Provisional Patent Application No. 202011002502, filed January 20, 2020, the entire content of which is incorporated by reference herein.

### TECHNICAL FIELD

The technical field generally relates to flight guidance systems, and more particularly relates to flight guidance systems that optimize speed brake operations.

### BACKGROUND

Presenting relevant and critical information to pilots without cluttering the screen and/or occluding other relevant information is an ongoing technical problem. Additionally, determining which information is the most relevant to present for each phase of flight, or segment, is an ongoing technical problem.

With regard to a descent, generally, a Flight Management System (FMS) on an aircraft constructs a descent path for the aircraft to follow to sequentially transition from the cruise phase of flight to the arrival phase of flight to the approach segment and to the destination runway and monitors the aircraft location and state with respect to the constructed descent path.

In some available flight guidance systems, when the aircraft departs the constructed descent path, the FMS generates a notification. Different original equipment manufacturers (OEMs) of aircraft provide different FMS notifications. Regardless of the form of the FMS notification, specific guidance for speed brakes can be lacking.

Accordingly, improved flight guidance systems and methods that present critical information to pilots in speed-alert scenarios are desired. Specifically, systems and methods that optimize speed brake operations in speed-alert scenarios are desired. The following disclosure provides these technological enhancements, in addition to addressing related issues.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In an embodiment, a processor-implemented method for optimizing the operation of speed brakes in an aircraft, including: upon generation of, by a flight management system (FMS), a speed-alert that the aircraft has departed an assigned descent path, calculating a position of the speed brakes that will put the aircraft back on the assigned descent path; and displaying, on display system, a widget with accompanying text that advises the position of the speed brakes responsive to the speed-alert.

Also provided is a system for optimizing the operation of speed brakes in an aircraft, including: a source of a speed-alert that the aircraft has departed an assigned descent path; and a control module comprising a processor and programmed to receive the speed-alert; calculate, responsive to the speed-alert, a position of the speed brakes required to put the aircraft back on the assigned descent path, the position is from among fully extended, partially extended, and fully retracted; and display, on a display system, a speed-brake widget with accompanying text that advises the position of the speed brakes in response to the speed-alert.

In an embodiment, an aircraft is provided. The aircraft including: a flight management system (FMS) that generates a speed-alert that the aircraft has departed an assigned descent path; a speed brakes system; a display system; and a control module operationally coupled to the FMS, the speed brakes system, the display system; the control module comprising a processor programmed to calculate, in response to the speed-alert, an optimized operation of the speed brakes required to put the aircraft back on the assigned descent path, wherein the optimized operation of the speed brakes includes a position from among fully extended, partially extended, and fully retracted, partially extended including a magnitude of application of the speed brakes associated with between 0 and 100 percent extended; and display, on the display system, (i) a speed-brake widget with accompanying text that advises the optimized operation of the speed brakes in response to the speed-alert, and (ii) alphanumeric information indicating the magnitude associated with the position of the speed brakes.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present application will hereinafter be described in conjunction with the following drawing figures, wherein like numerals denote like elements, and:
FIG. 1 is a block diagram of a system for optimizing the operation of speed brakes in an aircraft, in accordance with an exemplary embodiment;
FIGS. 2-3 are illustrations of a CDU help window showing a computed optimum speed brake magnitude, in accordance with an exemplary embodiment;
FIGS. 4-5 are illustrations showing a dedicated area on an engine indicating and crew alerting system (EICAS) page for a speed brake widget, in accordance with an exemplary embodiment;
FIGS. 6-7 depict the speed brake widget including a trend indicator, in accordance with an exemplary embodiment;
FIG. 8 is an illustration showing a depiction of optimizing the operation of speed brakes on a cockpit display having a horizontal display and a vertical situation display, in accordance with an exemplary embodiment; and
FIG. 9 is a flow chart for a method for how optimizing the operation of speed brakes, in accordance with an exemplary embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. The embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, summary, or the following detailed description.

As mentioned, a constructed descent path is an assigned descent path for the aircraft to follow to sequentially transition from the cruise phase of flight (start) to the arrival phase of flight to the approach segment and to the destination runway (end). A Flight Management System (FMS) on an aircraft generally performs complex and multifaceted energy management to construct the descent path from start to end.

Also as mentioned, in some available flight guidance systems, when the aircraft has departed an assigned descent path, the FMS may generate a notification. The notification that the FMS generates in these scenarios is usually textual and displayed on a cockpit display. Different original equipment manufacturers (OEMs) of aircraft provide different FMS notifications. In some aircraft, the FMS generates a "DRAG REQUIRED" text notification to advise the pilot of speed changes required to maintain the descent path. On other aircraft, the FMS generates an "EXTEND SPEED BRAKES" and/or a "RETRACT SPEED BRAKES" text notification to advise the pilot of speed changes required to maintain the descent path. When the pilot sees the FMS notification, the pilot must figure out exactly how to respond with available equipment, such as speed brakes and throttles. For simplifying purposes, the textual notification to indicate that the aircraft has departed an assigned descent path is referred to herein as a speed-alert, and the FMS is an exemplary source of a speed-alert. Additionally, once the speed-alert is generated, as used herein, the aircraft may be in a speed reduction mode until the speed-alert scenario ends, during which time the pilot has to continually figure out how to respond to the speed-alert. The speed-alert scenario ends when the aircraft returns to its assigned descent path. Accordingly, responding to the speed-alert is a technical problem. A technical problem remains, in that the aforementioned speed-alerts don't provide specific equipment detail or optimizing recommendations for available equipment.

Embodiments disclosed herein provide a technical solution to this technical problem. Exemplary embodiments of the improved flight guidance systems and methods display critical information to pilots to optimize operation of the speed brakes in response to a speed-alert. Some embodiments of the improved flight guidance systems and methods also present critical information to pilots to optimize application of the throttle in response to the speed-alert. Further, in various embodiments, techniques for attracting visual attention (such as a widget shape, color rendering, and widget location) enhance the human-machine interface and additionally contribute to the provided technical solution.

In the exemplary embodiments, the descent path includes a path/trajectory from start to end, and the FMS may also calculate, for each phase or segment, a respective speed tolerance (referred to as limit speeds and including an upper limit speed and a lower limit speed) to allow for unknown winds. When the aircraft speed reaches, in any phase or segment, either of the limit speeds while performing the descent, the aircraft has departed its assigned descent path and is in a speed-alert scenario. Sometimes, when the aircraft is in a speed-alert scenario, such as due to an unforeseen wind, the aircraft may depart the constructed descent path. The figures and descriptions below provide more detail.

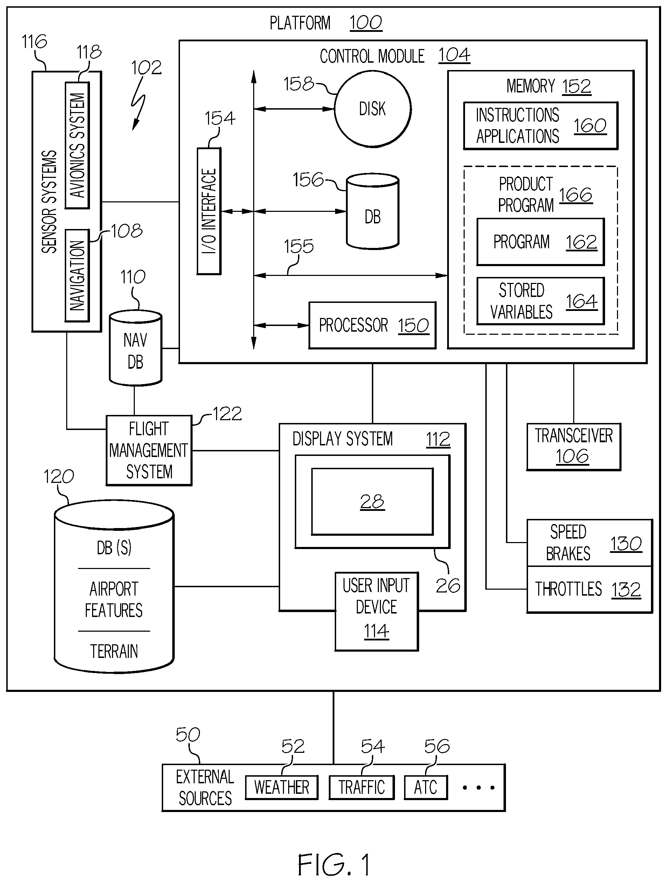

Turning now to FIG. 1, in an embodiment, the system for providing dynamic readouts for primary flight displays **102** (also referred to herein as "system" **102**) is generally located in a mobile platform **100.** In various embodiments, the mobile platform **100** is an aircraft, and is referred to as aircraft **100.** The system **102** embodies a control module **104** (which is depicted in a functional form as an enhanced computer system). Although the control module **104** is shown as an independent functional block, the control module **104** may be integrated within a preexisting mobile platform management system, avionics system, cockpit display system (CDS), flight controls system (FCS), or aircraft flight management system (FMS **122**). Although the control module **104** is shown onboard the aircraft **100,** optionally, it may exist in an optional electronic flight bag (EFB). In embodiments in which the control module is within an EFB, the display system **112** and user input device **114** may also be part of the EFB. Further, in some embodiments, the control module **104** may reside in a portable electronic device (PED) such as a tablet, cellular phone, or the like.

The control module **104** performs the processing functions of the system **102.** To perform these functions, the control module **104** may be operatively coupled to any combination of the following aircraft systems: a source of real-time aircraft status data, such as a navigation system **108;** a source of prescribed flight plan data, such as a navigation database (NavDB **110**); and, a display system **112.** In various embodiments, the control module **104** is additionally operationally coupled to one or more of: a transceiver **106;** a user input device **114;** one or more databases **120;** a flight management system (FMS **122**); a speed brakes **130** system; a throttle **132** system; and one or more avionics systems sensors **118.** The functions of these aircraft systems, and their interaction, are described in more detail below.

The navigation system **108** is a type of sensor system **116.** The navigation system **108** is configured to provide real-time navigation data and/or information regarding operation of the aircraft **100.** As used herein, "real-time" is interchangeable with current and instantaneous. The navigation system **108** may be realized as including a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation of the FMS **122,** as will be appreciated in the art. The data provided by the navigation system **108** is referred to as navigation data (also referred to herein as aircraft status data). Aircraft status data may include any of: an instantaneous position (e.g., the latitude, longitude, orientation), a flight path angle, a vertical speed, a ground speed, an instantaneous altitude (or height above ground level), an instantaneous heading of the aircraft **100** (i.e., the direction the aircraft is traveling in relative to some reference), and a current phase of flight. The real-time aircraft status data, or navigation data, is made available such that the display system **112,** the transceiver **106,** and the control module **104,** may further process and/or handle the aircraft status data.

Prescribed flight plan data may include a series of intended geospatial midpoints between a departure and an arrival, as well as performance data associated with each of the geospatial midpoints (the performance data including intended navigation data such as intended airspeed, intended altitude, intended acceleration, intended flight path angle, and the like). A source of a prescribed flight plan data may be a storage location or a user input device. In various embodiments, the NavDB **110** is the source of a prescribed flight plan. The navigation database (NavDB **110**) is a storage location that may also maintain a database of flight plans, and/or information regarding terrain and airports and/or other potential landing locations (or destinations) for the aircraft **100.** In operation, the navigation system **108** and the NavDB **110** may be integrated with a FMS **122.**

The avionics system(s) **118** is another type of sensor system **116.** In various embodiments, the avionics system(s) **118** provide aircraft performance data and feedback for subsystems on the aircraft **100.** Examples of the aircraft performance data include: engine thrust level, fuel level, braking status, temperature control system status, and the like. As may be appreciated, the avionics system(s) **118** may therefore include a variety of on-board detection sensors, and, as part of the sensor systems **116,** may be operationally coupled to the FMS **122.**

In various embodiments, the FMS **122,** in cooperation with the sensor systems **116** and the NavDb **110,** provides real-time flight guidance for aircraft **100.** The FMS **122** is configured to compare the instantaneous position and heading of the aircraft **100** with a prescribed flight plan for the aircraft **100.** To this end, in various embodiments, the NavDB **110** supports the FMS **122** in maintaining an association between a respective airport, its geographic location, runways (and their respective orientations and/or directions), instrument procedures (e.g., approach procedures, arrival routes and procedures, takeoff procedures, and the like), airspace restrictions, and/or other information or attributes associated with the respective airport (e.g., widths and/or weight limits of taxi paths, the type of surface of the runways or taxi path, and the like). In various embodiments, the FMS **122** also supports controller pilot data link communications (CPDLC), such as through an aircraft communication addressing and reporting system (ACARS) router; this feature may be referred to as a communications management unit (CMU) or communications management function (CMF). Accordingly, in various embodiments, the FMS **122** may be a source for the real-time aircraft status data of the aircraft **100.**

The display system **112** includes a display device **26** for presenting an image **28.** The display system **112** is configured to continuously receive and process real-time aircraft status data and flight plan information. In various embodiments, the display system **112** formats and renders information received from the FMS **122,** as well as external sources **50.** In various embodiments, the display system 112 may directly receive input from an air data heading reference system (AHRS), an inertial reference system (IRS), the navigation system **108,** or the FMS **122.** The control module **104** and the display system **112** are cooperatively configured to generate the commands ("display commands") for the display device **26** to render thereon the image **28,** comprising various graphical user interface elements, tables, menus, buttons, and pictorial images, as described herein. In exemplary embodiments, the display device **26** is realized on one or more electronic display devices configured as any combination of: a head up display (HUD), an alphanumeric display, a vertical situation display (VSD) and a lateral navigation display (ND). The display device **26** is responsive to display commands from the control module **104** and/or display system **112.**

Renderings on the display system **112** may be processed by a graphics system, components of which may be integrated into the display system **112** and/or be integrated within the control module **104.** Display methods include various types of computer-generated symbols, text, and graphic information representing, for example, pitch, heading, flight path, airspeed, altitude, runway information, waypoints, targets, obstacles, terrain, and required navigation performance (RNP) data in an integrated, multi-color or monochrome form. Display methods also include various formatting techniques for visually distinguishing objects and routes from among other similar objects and routes, and for causing objects and symbols to fade-in and fade-out. As used herein, a fade-in and/or fade-out means changing between not being rendered at all (i.e., zero percent) and being fully rendered (i.e., 100%) in incremental steps. The control module **104** is said to display various images and selectable options described herein. In practice, this may mean that the control module **104** generates display commands, and, responsive to receiving the display commands from the control module **104,** the display system **112** displays, renders, or otherwise visually conveys on the display device **26,** the graphical images associated with operation of the aircraft **100,** and specifically, the graphical images as described herein.

The user input device **114** and the control module **104** are cooperatively configured to allow a user (e.g., a pilot, co-pilot, or crew member) to interact with display devices in the display system **112** and/or other elements of the system **102,** as described in greater detail below. Depending on the embodiment, the user input device **114** may be realized as a cursor control device (CCD), keypad, touchpad, keyboard, mouse, touch panel (or touchscreen), joystick, knob, line select key, voice controller, gesture controller, or another suitable device adapted to receive input from a user. When the user input device **114** is configured as a touchpad or touchscreen, it may be integrated with the display system **112.** As used herein, the user input device **114** may be used to for a pilot to accept a runway change or to request a runway change.

In various embodiments, any combination of the FMS **122,** user input device **114,** and transceiver **106,** may be coupled to the display system **112** such that the display system **112** may additionally generate or render, on a display device **26,** real-time information associated with respective aircraft **100** components. Coupled in this manner, the FMS **122** and transceiver **106** are configured to provide navigation information to support navigation, flight planning, and other aircraft control functions in a conventional manner, as well as to provide real-time data and/or information regarding the operational status of the aircraft **100** to the control module **104.** In some embodiments, the user input device **114,** FMS **122,** and display system **112** are configured as a control display unit (CDU).

External sources **50** communicate with the aircraft **100,** generally by way of transceiver **106.** External sources include: weather and surface data sources (weather **52**), such as a source for meteorological terminal aviation weather reports (METARS), automatic terminal information service (ATIS), datalink ATIS (D-ATIS), automatic surface observing system (ASOS); traffic data system(s) **54;** air traffic control (ATC) **56;** and a variety of other radio inputs. The traffic data system(s) **120** include numerous systems for providing real-time neighbor/relevant traffic data and information. For example, traffic data sources **54** may include any combination of: traffic collision avoidance system (TCAS), automatic dependent surveillance broadcast (ADS-B), traffic information system (TIS), crowd sourced traffic data and/or another suitable avionics system. Flight traffic information that is received from the traffic data system may include, for each neighbor aircraft of a plurality of neighbor aircraft, one or more of a respective (i) instantaneous position and location, vertical speed, and ground speed, (ii) instantaneous altitude, (iii) instantaneous heading of the aircraft, and (iv) aircraft identification. Information received from external sources may be processed as one or more information layers (for example, a weather layer, a traffic layer, and the like) and layers may be selectively overlaid on an existing image **28.**

The transceiver **106** is configured to support instantaneous (i.e., real time or current) communications between the aircraft **100** and the one or more external data source(s) **50.** As a functional block, the transceiver **106** represents one or more transmitters, receivers, and the supporting communications hardware and software required for the system **102** to communicate with the various external data source(s) **50** as described herein. In an example, the transceiver **106** supports bidirectional pilot-to-ATC (air traffic control) communications via a datalink. In addition to supporting the data link system, the transceiver **106** is configured to include or support an automatic dependent surveillance broadcast system (ADS-B), a communication management function (CMF) uplink, a terminal wireless local area network (LAN) unit (TWLU), or any other suitable radio communication system that supports communications between the aircraft **100** and the various external source(s) **50.** In this regard, the transceiver **106** may allow the aircraft **100** to receive information that would otherwise be unavailable to the pilot and/or co-pilot using only the onboard systems.

In various embodiments, the control module **104** is additionally operationally coupled to one or more databases **120.** The databases **120** may include an airport features database, having therein maps and geometries, as well as airport status data for the runways and/or taxi paths at the airport; the airport status data indicating operational status and directional information for the taxi paths (or portions thereof). Additionally, the databases **120** may include a terrain database, having therein topographical information for the airport and surrounding environment.

As mentioned, the control module **104** performs the functions of the system **102.** As used herein, the term "module" refers to any means for facilitating communications and/or interaction between the elements of the system **102** and performing additional processes, tasks and/or functions to support operation of the system **102,** as described herein. In various embodiments, the control module **104** may be any hardware, software, firmware, electronic control component, processing logic, and/or processor device, individually or in any combination. In various embodiments, the control module **104** may be implemented or realized with: a general purpose processor (shared, dedicated, or group) controller, microprocessor, or microcontroller, and memory that executes one or more software or firmware programs embodying the algorithms and tasks described herein; a content addressable memory; a digital signal processor; an application specific integrated circuit (ASIC), a field programmable gate array (FPGA); any suitable programmable logic device; combinational logic circuit including discrete gates or transistor logic; discrete hardware components and memory devices; and/or any combination thereof, designed to perform the functions described herein.

Accordingly, in FIG. 1, an embodiment of the control module **104** is depicted as an enhanced computer system including a processor **150** and a memory **152.** The processor **150** may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals. The memory **152** may comprise RAM memory, ROM memory, flash memory, registers, a hard disk, or another suitable non-transitory short or long-term storage media capable of storing computer-executable programming instructions or other data for execution. The memory **152** may be located on and/or co-located on the same computer chip as the processor **150.** Generally, the memory **152** maintains data bits and may be utilized by the processor **150** as storage and/or a scratch pad during operation. Specifically, the memory **152** stores instructions and applications **160.** Information in the memory **152** may be organized and/or imported from an external data source **50** during an initialization step of a process; it may also be programmed via a user input device **114.**

The novel program **162** includes rules and instructions which, when executed by the processor **150,** cause the control module **104** to perform the functions, techniques, and processing tasks associated with the operation of the system **102.** Novel program **162** and associated stored variables **164** may be stored in a functional form on computer readable media, as depicted, in memory **152.** While the depicted exemplary embodiment is described in the context of a fully functioning computer system, those skilled in the art will recognize that the mechanisms of the present disclosure are capable of being distributed as a program product **166,** with one or more types of non-transitory computer-readable signal bearing media used to store the program and the instructions thereof and carry out the distribution thereof, such as a non-transitory computer readable medium bearing the program **162** and containing computer instructions stored therein for causing a computer processor (such as the processor **150**) to perform and execute the program **162.** Such a program product **166** may take a variety of forms, and the present disclosure applies equally regardless of the type of computer-readable signal bearing media used to carry out the distribution. Examples of signal bearing media include: recordable media such as floppy disks, hard drives, memory cards and optical disks, and transmission media such as digital and analog communication links. It will be appreciated that cloud-based storage and/or other techniques may also be utilized in certain embodiments.

During operation, the processor **150** loads and executes one or more programs, algorithms and rules embodied as instructions and applications **160** contained within the memory **152** and, as such, performs the tasks and operations attributed herein to the general operation of the system **102.** In specifically executing the processes described herein, the processor **150** loads the instructions, algorithms, and rules embodied in the program **162,** thereby being programmed with program **162.** During execution of program **162,** the processor **150** and the memory **152** form the control module **104** that performs the processing activities of the system **102.**

In various embodiments, the processor/memory unit of the control module **104** may be communicatively coupled (via a bus **155**) to an input/output (I/O) interface **154,** and a database **156.** The bus **155** serves to transmit programs, data, status and other information or signals between the various components of the control module **104.** The bus **155** can be any suitable physical or logical means of connecting computer systems and components. This includes, but is not limited to, direct hard-wired connections, fiber optics, infrared and wireless bus technologies.

The I/O interface **154** enables intra control module **104** communication, as well as communications between the control module **104** and other system **102** components, and between the control module **104** and the external data sources via the transceiver **106.** The I/O interface **154** may include one or more network interfaces and can be implemented using any suitable method and apparatus. In various embodiments, the I/O interface **154** is configured to support communication from an external system driver and/or another computer system. Also, in various embodiments, the I/O interface **154** may support communication with technicians, and/or one or more storage interfaces for direct connection to storage apparatuses, such as the database **156.** In one embodiment, the I/O interface **154** is integrated with the transceiver **106** and obtains data from external data source(s) directly.

The database **156** may include an aircraft-specific parameters database (comprising aircraft-specific parameters and configuration data for aircraft **100,** as well as for a variety of other aircrafts) and parameters and instructions for processing user inputs and rendering images **28** on the display device **26,** as described herein. In some embodiments, the database **156** is part of the memory **152.** In various embodiments, the database **156** and the database **120** are integrated, either within the control module **104** or external to it. Accordingly, in some embodiments, the airport features and terrain features are pre-loaded and internal to the control module **104.** Another form of storage media that may be included in, and utilized by, the control module **104** is an optional hard disk **158.**

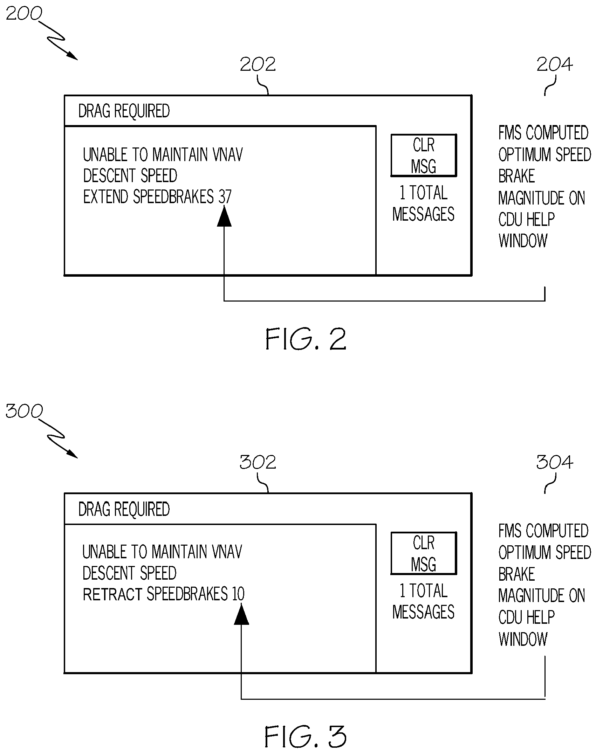

As mentioned, the technologically improved systems and methods provided herein provide critical information to pilots for optimizing speed brake operations during a descent. The technologically improved systems and methods utilize data from the FMS to calculate and provide an optimum amount of speed brakes and/or thrust in on speed-alert scenario to return to the constructed descent path. The technologically improved systems and methods can provide progressive alerts that show changes in the speed-alert conditions. The technologically improved systems and methods display an amount of speed brakes required using a widget on a graphical user interface, the display of the information being in an intuitive and easy to grasp manner, using various combinations of text and widgets, alphanumeric displays, horizontal displays, and/or vertical displays. FIGS. 2-8 provide examples of displayed information.

In FIG. 2, an alphanumeric display **200,** such as may be found on a CDU help window, depicts the FMS generated "drag required" text **202,** with the addition of (at **204**): the added optimum speed brake magnitude of 37 alongside an "extend speed brakes" message. In FIG. 3, an alphanumeric display **300,** such as may be found on a CDU help window, depicts the "drag required" text **302,** and shows (at **304**) the added optimum speed brake magnitude of 10 alongside a "retract speed brakes" message.

As used herein, the optimized operation of the speed brakes includes at least a position of the speed brakes **130** that will put the aircraft back on the assigned descent path. The position of the speed brakes **130** associated with the optimized operation of the speed brakes **130** is among fully extended (defined as 100 percent extended), partially extended, and fully retracted (defined as 0 percent extended), partially extended including a magnitude of application of the speed brakes associated with between 0 and 100 percent extended.

The speed brake widget incorporates a progressive indication of the percent extended that is determined to be the optimized operation of the speed brakes **130,** wherein progressive indication means a smooth or continuous transition between 0 percent and 100. The control module **104** displays, on a display system **112,** a speed brake widget with accompanying text that advises of the optimized operation of the speed brakes 130.

Likewise, in embodiments that calculate an optimized application of the throttles **132** in response to a speed-alert, the application of the throttles **132** is one of fully applied (defined as 100 percent thrust), partially applied, and 0 percent applied, partially applied having a magnitude of application of the throttle associated with between 0 and 100 percent applied.

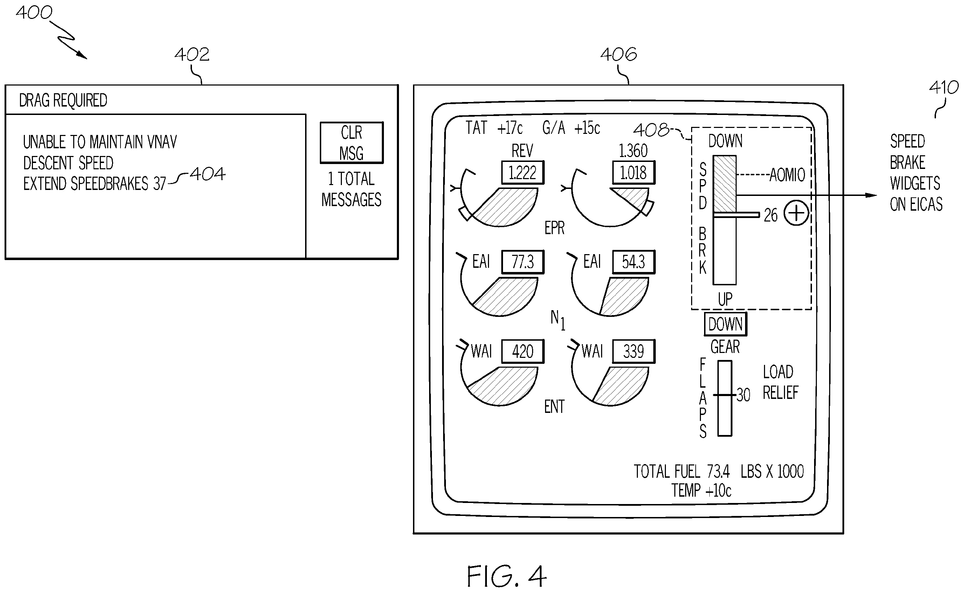

In various embodiments, as depicted in FIG. 4, the control module **104** displays, on the display system **112,** a speed brake widget with accompanying text that also advises of the optimized application of the throttles **132** in response to a speed-alert. In FIG. 4, as in FIG. 3, the alphanumeric information on the CDU help window display **400** depicts the "drag required" **402** and has the accompanying text magnitude 37 associated with the optimized operation of the speed brakes **130** (at **404**). In addition, as shown in FIG. 4, the control module **104** dedicates an area **408** on a page of an EICAS **406** for displaying a speed brake widget **410.** The speed brake widget **410** can take a variety of forms, so long as it conveys the information as described herein. In the exemplary embodiment, the speed brake widget **410** is a vertical bar labeled "spd brk."

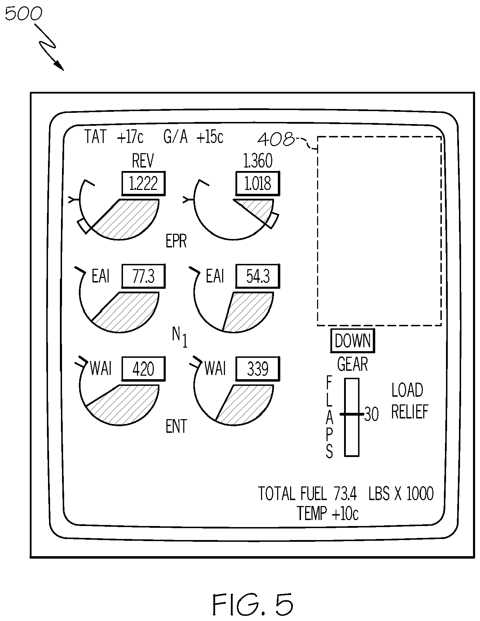

It is contemplated that when there is no "drag required" (or equivalent) notification from the FMS, or when this speed reduction mode is not required, the speed brake widget **410** would not be displayed, i.e., would be removed from the display or would otherwise be invisible, as shown in FIG. 5. In FIG. 5, the EICAS page **500** is depicted, and the area **408,** dedicated to having a speed brake widget **410,** does not have one displayed. Said differently, in various embodiments, the speed brake widget **410** only gets displayed on the EICAS page **500** upon the co-occurrence of (1) a speed-alert (for example, a DRAG REQUIRED notification) from the FMS, and (2) a speed reduction mode is active in the flight plan; otherwise, the control module **104** ceases displaying the speed brake widget and accompanying text when the aircraft has been brought back to its constructed descent path (also referred to as its assigned descent path).

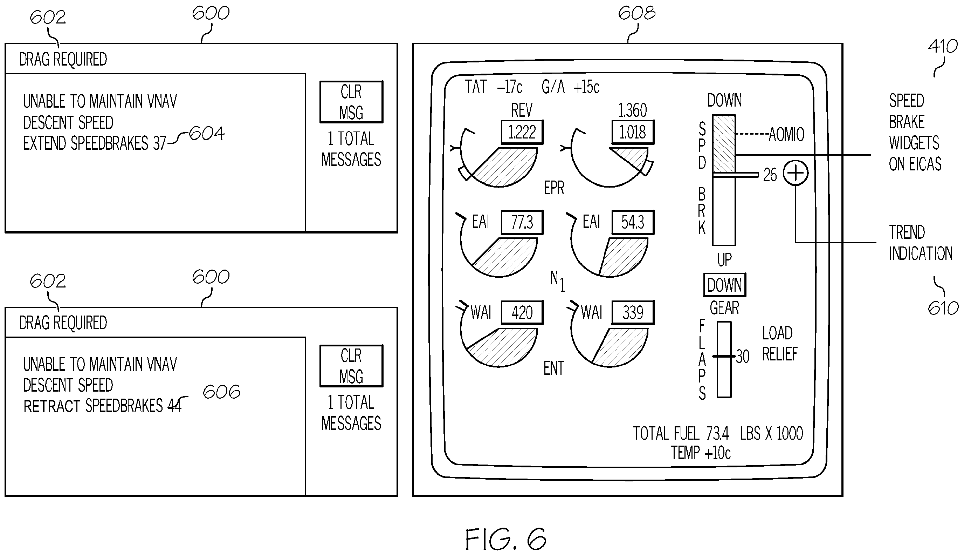

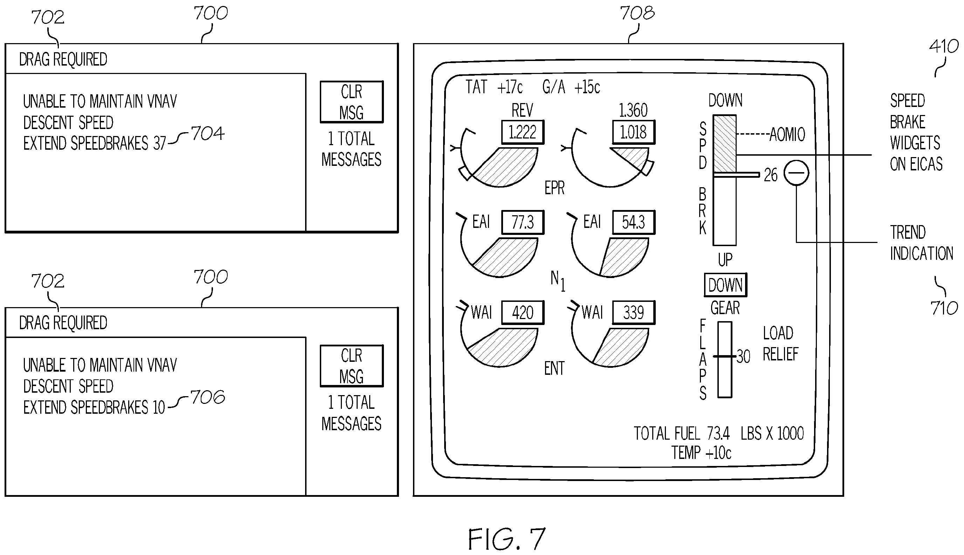

As depicted in FIGS. 6 and 7, in various exemplary embodiments, the system **102** generates a speed brake widget **410** that not only depicts that an application of the speed brakes **130** is required, but additionally depicts a trend of an application of the speed brakes **130** over time. In FIG. 6, the alphanumeric information on the CDU display **600** depicts the speed-alert "drag required" notification **602** per the FMS, and the system **102** therewith calculates and displays an optimized operation of the speed brakes **130** required to put the aircraft **100** back on the assigned descent path. In the example, the optimized operation of the speed brakes **130** include an "extend speed brakes" at magnitude 37 (indicated at **604**); further, at a time (such as delta-t) later, the FMS is still generating the "drag required" notification **602,** and the system **102** additionally calculates and displays an optimized operation of the speed brakes **130** including an "extend speed brakes" at magnitude 44 (indicated at **606**). In this example, the control module **104** determines that the optimized application of the speed brakes **130** (i.e., the position of the speed brakes **130** required to put the aircraft back on the assigned descent path) went from magnitude 37 to magnitude 44, which indicates an increasing trend over time delta-t. In the example, the control module **104** renders the speed brake widget **410** with an increasing trend indication **610** on the EICAS page **608.** The increasing trend indication 610 can take a variety of forms, so long as it conveys the information as described herein. In the exemplary embodiment, the increasing trend indication **610** is a plus sign within a circle.

In FIG. 7, the alphanumeric information on the CDU display **700** depicts the "drag required" notification **702** per the FMS, and the system **102** additionally calculates and displays an optimized extend speed brakes magnitude 37 (at **704**); further, at time delta-t later, the FMS is still generating the "drag required" notification **702,** and the system **102** additionally calculates and displays an optimized extend speed brakes optimized extend speed brakes magnitude 10 (at **706**). In this example, the control module **104** determines that the optimized application of the speed brake (i.e., the position of the speed brakes required to put the aircraft back on the assigned descent path) went from magnitude 37 to magnitude 10, which indicates a decreasing trend. In the example, the control module **104** renders the speed brake widget **410** with a decreasing trend indication **710** on the EICAS page **708.** The decreasing trend indication **710** can take a variety of forms, so long as it conveys the information as described herein. In the exemplary embodiment, the decreasing trend indication **710** is a minus sign within a circle.

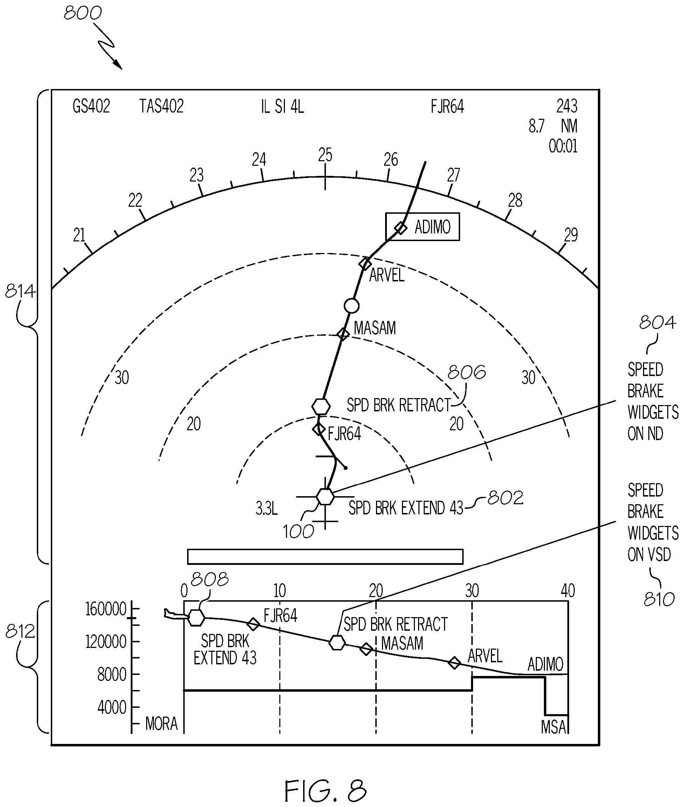

In FIG. 8, a cockpit display **800** is depicted having a lateral display **814** (often called a navigation display or horizontal situation display, HSD), and a vertical display **812** (often called a vertical situation display, VSD). Ownship aircraft **100** is depicted at the center bottom of the lateral display **814,** and at the upper left side of the vertical display **812.** A symbol is used to show that the speed reduction mode is underway, and further, to show where speed brake magnitude changes are advised. In FIG. 8, the symbol is overlaid on the ownship aircraft **100** icons to show the recommended speed brake extension (at **804** on the HSD **814,** the speed brake extension at magnitude 43 is depicted, and at **808** on the VSD **812,** the speed brake extension at magnitude 43 is depicted). In FIG. 8, the symbol is depicted ahead of the aircraft **100,** on the path of the aircraft **100,** to show a recommended speed brake retraction (at **806** on the HSD **814,** the speed brake retraction, and at **810** on the VSD **812,** the speed brake retraction). In the exemplary embodiment, the symbol is a hexagon that is sized to be visually distinguishable from other icons and symbols displayed on the cockpit display, while not obscuring the wings or tail of the aircraft **100** icon, however, the symbol can take a variety of forms, so long as it is visually discernable to serve as an alert, and used to convey the information as described herein without obscuring the ownship aircraft **100** icon.

The images **28** of FIGS. 2-8 provide non-limiting examples of this technological enhancement over other flight guidance systems. The images of FIGS. 2-8 are understood to be based on current aircraft status data for the aircraft **100** and to be dynamically modified responsive to continuously obtaining and processing the current aircraft status data. The images **28** may also be continuously updated to reflect real-time changes with respect to terrain, airport features, weather and neighbor traffic/relevant traffic.

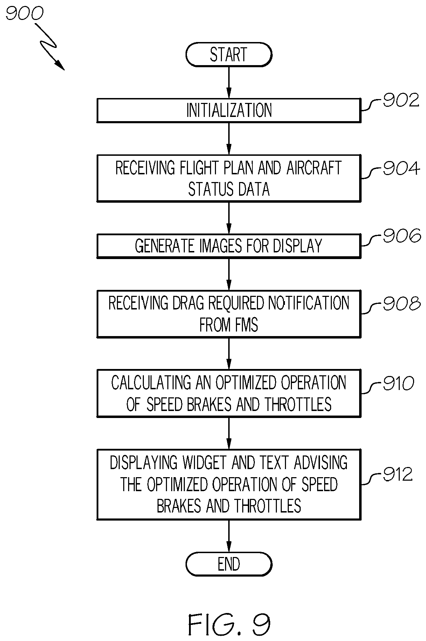

Referring now to FIG. 9 and with continued reference to FIGS. 1-8, a flow chart is provided for a method **900** for optimizing the operation of speed brakes in the aircraft **100,** in accordance with various exemplary embodiments. For illustrative purposes, the following description of method **900** may refer to elements mentioned above in connection with FIG. 1. In practice, portions of method **900** may be performed by different components of the described system. It should be appreciated that method **900** may include any number of additional or alternative tasks, the tasks shown in FIG. 9 need not be performed in the illustrated order, and method **900** may be incorporated into a more comprehensive procedure or method having additional functionality not described in detail herein. Moreover, one or more of the tasks shown in FIG. 9 could be omitted from an embodiment of the method **900** if the intended overall functionality remains intact.

The method starts, and at **902** the control module **104** is initialized. As mentioned above, initialization may comprise uploading or updating instructions and applications **160,** program **162,** stored variables **164,** and various lookup tables stored in the database **156.** Stored variables may include, for example, a configurable delta airspeed, a configurable delta rate-change, predetermined amounts of time to use as time-thresholds, parameters for setting up a user interface, and the various shapes, various colors and/or visually distinguishing techniques used for icons and alerts. In some embodiments, program **162** includes additional instructions and rules for rendering information differently based on type of display device in display system **112.** Initialization at **902** may also include identifying external sources **50** and/or external signals and the communication protocols to use with each of them.

At **904,** the prescribed flight plan data and aircraft status data, including location and speed, is received. During operation, it is understood that aircraft status data is continuously received. At **906,** one or more images **28** may be generated and displayed on a CDU help window, an EICAS page, a VSD, an HSD, or any combination thereof. Some displayed information may depict navigational information for the aircraft **100,** environmental surroundings of the aircraft, and aircraft status data. The displayed images **28** may be continuously updated.

At **908,** the control module **104** receives, usually from the FMS **122,** a speed-alert notification indicating that the aircraft has departed an assigned descent path. It is to be appreciated that, at **908,** the speed-alert may be "drag required" notification or may be a textual speed-alert as provided via other OEMs (such as, "EXTEND SPEED BRAKES" and/or a "RETRACT SPEED BRAKES"). At **910,** the control module **104** calculates an optimized operation of the speed brakes and an optimized application of the throttles required to put the aircraft back on the assigned descent path. At **912,** displaying, by the control module **104,** a speed-brake widget with accompanying text that advises the optimized operation of the speed brakes.

Thus, technologically improved systems and methods for optimizing the operation of speed brakes in an aircraft are provided. As is readily appreciated, the above examples of the system **102** for providing dynamic readouts for a cockpit display are non-limiting, and many others may be addressed by the control module **104.**

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality. Whether such functionality is implemented as hardware or software depends upon the application and design constraints imposed on the overall system.

Skilled artisans may implement the described functionality in varying ways for each application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

Further, the various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of the method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. When "or" is used herein, it is the logical or mathematical or, also called the "inclusive or." Accordingly, A or B is true for the three cases: A is true, B is true, and, A and B are true. In some cases, the exclusive "or" is constructed with "and;" for example, "one from the set including A and B" is true for the two cases: A is true, and B is true.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A processor implemented method for optimizing the operation of speed brakes in an aircraft, comprising:
upon generation of, by a flight management system (FMS), a speed-alert that the aircraft has departed an assigned descent path,
calculating a position of the speed brakes that will put the aircraft back on the assigned descent path; and
displaying, on display system, a widget with accompanying text that advises the position of the speed brakes responsive to the speed-alert.

2. The method of claim 1, wherein the speed-alert is an FMS drag required notification.

3. The method of claim 1, wherein the speed-alert is an FMS extend speed brakes notification.

4. The method of claim 1, wherein the position of the speed brakes is from among fully extended, partially extended, and fully retracted, and wherein the widget incorporates a progressive indication of the percent extended.

5. The method of claim 4, wherein partially extended includes a magnitude of application of the speed brakes associated with between 0 and 100 percent extended, and further comprising rendering alphanumeric information indicating, in a control display window (CDU) help window, the magnitude associated with the position of the speed brakes.

6. The method of claim 5, further comprising, ceasing displaying the widget and accompanying text when the aircraft has been brought back to its assigned descent path.

7. The method of claim 6, wherein the display system is a multi-function display system (MFD), and further comprising displaying the widget and accompanying text in an area on the MFD that is used for engine indicators.

8. The method of claim 7, further comprising:
determining that the position of the speed brakes that will put the aircraft back on the assigned descent path follows a decreasing trend; and
rendering the widget with a decreasing trend indication.

9. The method of claim 7, further comprising:
determining that the position of the speed brakes that will put the aircraft back on the assigned descent path follows an increasing trend; and
rendering the widget with an increasing trend indication.

10. A system for optimizing the operation of speed brakes in an aircraft, comprising:
a source of a speed-alert that the aircraft has departed an assigned descent path; and
a control module comprising a processor and programmed to
receive the speed-alert;
calculate, responsive to the speed-alert, a position of the speed brakes required to put the aircraft back on the assigned descent path, the position is from among fully extended, partially extended, and fully retracted; and
display, on a display system, a speed-brake widget with accompanying text that advises the position of the speed brakes in response to the speed-alert.

11. The system of claim 10, wherein partially extended includes a magnitude of application of the speed brakes associated with between 0 and 100 percent extended, and the control module is further programmed to render alphanumeric information indicating, in a control display window (CDU) help window, the magnitude associated with the position of the speed brakes.

12. The system of claim 11, wherein the control module is further programmed to render the speed-brake widget with a progressive indication of the percent extended.

13. The system of claim 12, wherein the control module is further programmed to cease displaying the speed-brake widget and accompanying text when the aircraft has been brought back to its assigned descent path.

14. The system of claim 13, wherein the control module is further programmed to:
determine that the position of the speed brakes required to put the aircraft back on the assigned descent path follows a decreasing trend; and
render the speed-brake widget with a decreasing trend indication.

15. The system of claim 13, wherein the control module is further programmed to:
determine that position of the speed brakes required to put the aircraft back on the assigned descent path of the speed brakes follows an increasing trend;
render the speed-brake widget with an increasing trend indication;
calculate an application of throttles in response to the speed-alert; and
display the application of the throttles next to the widget.
